# EUROPÄISCHE PATENTSCHRIFT

(11) **EP 2 892 736 B1**
(45) Veröffentlichungstag und Bekanntmachung des Hinweises auf die Patenterteilung: **30.05.2018**
(21) Anmeldenummer: 13744541.7
(22) Anmeldetag: 01.08.2013
(51) Int. Cl.: B60C 11/13, B60C 11/03

(54) **FAHRZEUGLUFTREIFEN**
VEHICLE PNEUMATIC TYRE
PNEUMATIQUE DE VÉHICULE

(30) Priorität: 10.09.2012 DE 102012108384
(43) Veröffentlichungstag der Anmeldung: 15.07.2015
(73) Patentinhaber: Continental Reifen Deutschland GmbH, 30165 Hannover (DE)
(72) Erfinder: BEHR, Ulrich, 30169 Hannover (DE)
(74) Vertreter: Finger, Karsten
(86) Internationale Anmeldenummer: PCT/EP2013/066138
(87) Internationale Veröffentlichungsnummer: WO 2014/037165

(56) Entgegenhaltungen:
- EP-A1- 2 457 745
- EP-A1- 2 463 120
- EP-A1- 2 636 544

## Beschreibung

Die Erfindung betrifft einen Fahrzeugluftreifen mit einem Laufstreifenprofil, welches durch Umfangsrillen in in Umfangsrichtung umlaufende Profilpositive, wie Profilbänder und/oder Profilblockreihen gegliedert ist, wobei zumindest ein Profilpositiv vorgesehen ist, in welchem Rillen ausgebildet sind, welche sich jeweils aus zwei unter einem stumpfen Winkel zueinander und jeweils im Wesentlichen gerade verlaufenden Rillenabschnitten zusammensetzen, von welchen der eine, erste Rillenabschnitt in eine das Profilpositiv begrenzende Umfangsrille mündet und unter einem Winkel von höchstens 45° zur axialen Richtung verläuft und wobei sich der zweite Rillenabschnitt zumindest im Wesentlichen in Umfangsrichtung erstreckt und von zwei Rillenflanken begrenzt ist, wobei jene Rillenflanke, welche der Umfangsrille, in welche der erste Rillenabschnitt mündet, näher liegt, im Querschnitt zumindest im Wesentlichen in radialer Richtung verläuft.

Ein Fahrzeugluftreifen der eingangs genannten Art ist beispielsweise aus der
EP 2 457 745 A1 bekannt. Der Laufstreifen des Fahrzeugluftreifens weist neben zwei schulterseitig verlaufenden Profilblockreihen eine zentrale Profilrippe auf, in welcher mehrere über den Umfang des Laufstreifenprofils verteilt angeordnete und voneinander beabstandete Paare von axial nebeneinander angeordneten, in Umfangsrichtung ausgerichteten Rillen ausgebildet sind, die jeweils in eine quer oder schräg zur Umfangsrichtung verlaufende Rille münden, welche in eine benachbarte Umfangsrille mündet. Diese Rillen sollen der Profilrippe sowohl eine hohe Umfangs- als auch Quersteifigkeit verleihen und die Ableitung von Wasser in die Umfangsrillen unterstützen. Ferner sind in den schulterseitig verlaufenden Profilblockreihen Rillen vorgesehen, welche zwei unter einem stumpfen Winkel aneinander anschließende Rillenabschnitte aufweisen, wobei einer der Rillenabschnitte unter einem Winkel von 40° bis 90° zur Umfangsrichtung verläuft und in eine Umfangsrille mündet. Der andere Rillenabschnitt erstreckt sich zumindest im Wesentlichen in Umfangsrichtung und ist von zwei Rillenflanken begrenzt, welche jeweils in radialer Richtung verlaufen. Aus der EP 2 444 257 A1 ist ein für Schwerlastfahrzeuge geeigneter Reifen bekannt, welcher ein Laufstreifenprofil aufweist, welches sich aus einer Anzahl von Profilrippen zusammensetzt, die durch Umfangsrillen voneinander getrennt sind, wobei eine Profilrippe entlang des Reifenäquators verläuft. In dieser zentralen Profilrippe sind Rillen vorgesehen, welche sich aus zwei Rillenabschnitten, die unter einem stumpfen Winkel zueinander verlaufen, zusammensetzen, wobei der eine Rillenabschnitt jeweils in eine Umfangsrille mündet und der zweite Rillenabschnitt innerhalb der Profilrippe endet. Ein weiterer Laufstreifen, welcher Rillen mit zwei unter einem stumpfen Winkel zueinander verlaufenden Rillenabschnitten aufweist, ist aus der EP 2 463 120 A1 bekannt.

Es ist bekannt, dass vor allem in Umfangsrichtung des Laufstreifenprofils orientierte Rillenabschnitte zu einer Verbesserung des Wasserableitvermögens aus dem mittleren Bereich eines Profilpositives beitragen. Speziell bei für hohe Fahrgeschwindigkeiten vorgesehenen Sportreifen, die meist relativ breite Profilbänder oder Profilblockreihen aufweisen, ist mit den bekannten, sich aus zwei Rillenabschnitten zusammengesetzten Rillen nur ein unzureichendes Wasserableitvermögen erzielbar. Wasser kann aus den Profilpositiven nicht schnell genug abgeleitet werden, sodass solche Reifen hinsichtlich Nasshandling, beispielsweise Nassbremsen und Aquaplaning, den an sie gestellten Anforderungen nicht ausreichend genügen.

Der Erfindung liegt die Aufgabe zugrunde, die wasserableitende Wirkung solcher Rillen in Profilpositiven, insbesondere in Profilbändern, deutlich zu verbessern.

Gelöst wird die gestellte Aufgabe erfindungsgemäß dadurch, dass der in Umfangsrichtung verlaufende zweite Rillenabschnitt eine geringere Tiefe aufweist als der erste Rillenabschnitt und im Querschnitt von zwei zueinander V-förmig verlaufenden Rillenflanken begrenzt ist, wobei die von Wasser aus dem zweiten Rillenabschnitt unmittelbar angeströmte Rillenwand des ersten Rillenabschnittes eine über die Längserstreckung des Rillenabschnittes ausgebildete Fase ist.

Die erfindungsgemäß im Querschnitt asymmetrische Ausführung des in Umfangsrichtung verlaufenden zweiten Rillenabschnittes bewirkt gemeinsam mit der Fase entlang des angeströmten Bereiches des in die Umfangsrille mündenden ersten Rillenabschnittes eine optimale Ableitung von Wasser aus dem mittleren Bereich des Profilpositives.

Bei einer bevorzugten Ausführungsform der Erfindung weist der in Umfangsrichtung verlaufende zweite Rillenabschnitt eine maximale Tiefe von 2 mm auf, welche über den Verlauf des Rillenabschnittes in Richtung erstem Rillenabschnitt kontinuierlich zunimmt. Diese Maßnahme begünstigt das Einströmen von Wasser aus dem zweiten Rillenabschnitt in den ersten Rillenabschnitt.

Eine weitere, das Einströmen von Wasser aus dem zweiten Rillenabschnitt in den ersten Rillenabschnitt optimierende Maßnahme besteht darin, dass der zweite Rillenabschnitt eine breite von höchstens 2 mm aufweist, welche über den Verlauf dieses Rillenabschnittes in Richtung erstem Rillenabschnitt kontinuierlich zunimmt.

Von besonderem Vorteil ist die spezielle asymmetrische Ausgestaltung des zweiten Rillenabschnittes. Die an die in radialer Richtung verlaufende Rillenflanke angrenzende zweite Rillenflanke sollte mit der in radialer Richtung verlaufenden Rillenflanke einen Winkel einschließen, welcher zwischen 30° und 45° gewählt wird. Die derart gebildete trichterartige Öffnung des zweiten Rillenabschnittes zur Oberfläche der Profilpositives erleichtert einerseits das Einströmen des Wassers in diesen Rillenabschnitt und stabilisiert gleichzeitig die Rillenflanken beim Auftreten von Querkräften.

Auch der in die Umfangsrille mündende erste Rillenabschnitt ist auf besondere Weise strukturiert. So weist dieser Rillenabschnitt eine Basisrille auf, an welche zur Oberfläche des Profilpositives als Fasen ausgebildete Rillenwände anschließen, die diesen Rillenabschnitt zur Oberfläche des Profilpositives verbreitern. Die Fasen verhindern ein Einrollen der an der Oberfläche des Profilpositives vorliegenden Kanten dieses Rillenabschnittes und tragen zu einer Verbesserung des Wasseraufnahmevermögens des ersten Rillenabschnittes bei.

Besonders vorteilhaft ist der besondere Verlauf der vom Wasser aus dem zweiten Rillenabschnitt anströmbaren Fase des ersten Rillenabschnittes. Diese Fase läuft erfindungsgemäß bei der Umfangsrille an oder nahe der Oberfläche des Profilpositives aus, ihre radiale Erstreckung an ihrem im Profilpositiv befindlichen Ende ist am größten und entspricht hier der radialen Erstreckung der Rillenflanken des zweiten Rillenabschnittes zumindest im Wesentlichen.

Die Basisrille ist von zwei in radialer Richtung verlaufenden Rillenwänden begrenzt, weist eine Breite von 0,8 mm bis 1,5 mm auf und besitzt einen Rillengrund, welcher in einer Tiefe verläuft, die mindestens 70 % der vorgesehenen Profiltiefe beträgt und höchstens der Profiltiefe entspricht. Diese Ausführung der Basisrille hat den Vorteil, dass dieser Rillenabschnitt eine "Gelenkfunktion" übernehmen kann, um beim Abrollen des Reifens ein Abplatten des Reifens im Footprint zu erleichtern.

Die vom Wasser aus dem zweiten Rillenabschnitt anströmbare Fase des ersten Rillenabschnittes verläuft gegenüber der radialen Richtung unter Winkeln von 5° bis 45° geneigt. Dieser sich über die Erstreckung der Fase ändernde Winkel ist günstig für die Geräuschentwicklung des Reifens beim Abrollen.

Die zweite Fase des ersten Rillenabschnittes ist erfindungsgemäß mit einer im Wesentlichen konstanten radialen Erstreckung ausgebildet. Diese Maßnahme stabilisiert die an der Oberfläche des Profilpositives verlaufende Kante dieser Fase.

Günstig ist es ferner, wenn die zweite Fase des ersten Rillenabschnittes gegenüber der radialen Richtung unter Winkeln von 30° bis 70° geneigt verläuft. Auch diese Maßnahme trägt zur Verringerung des Abrollgeräusches bei.

Eine weitere das Profilpositiv stabilisierende Maßnahme besteht darin, dass die Fasen des ersten Rillenabschnittes eine radiale Erstreckung von höchstens 2 mm aufweisen.

Weitere Merkmale, Vorteile und Einzelheiten der Erfindung werden nun anhand der schematischen Zeichnung, die ein Ausführungsbeispiel der Erfindung darstellt, näher beschrieben. Dabei zeigen
Fig. 1 eine Draufsicht auf einen Umfangsabschnitt eines Profilbandes eines Laufstreifenprofils eines Fahrzeugluftreifens,
Fig. 2 eine Schrägansicht des Profilbandes aus Fig. 1,
Fig. 3 eine Schnittdarstellung gemäß der Schnittansicht der Linie III-III der Fig. 1,
Fig. 4 eine Schnittdarstellung gemäß der Schnittlinie IV-IV der Fig. 1,
Fig. 5 eine Schnittdarstellung gemäß der Schnittlinie V-V der Fig. 1 und
Fig. 6 eine Draufsicht zweier Profilbänder in einem Umfangsabschnitt eines Laufstreifens eines Fahrzeugluftreifens.

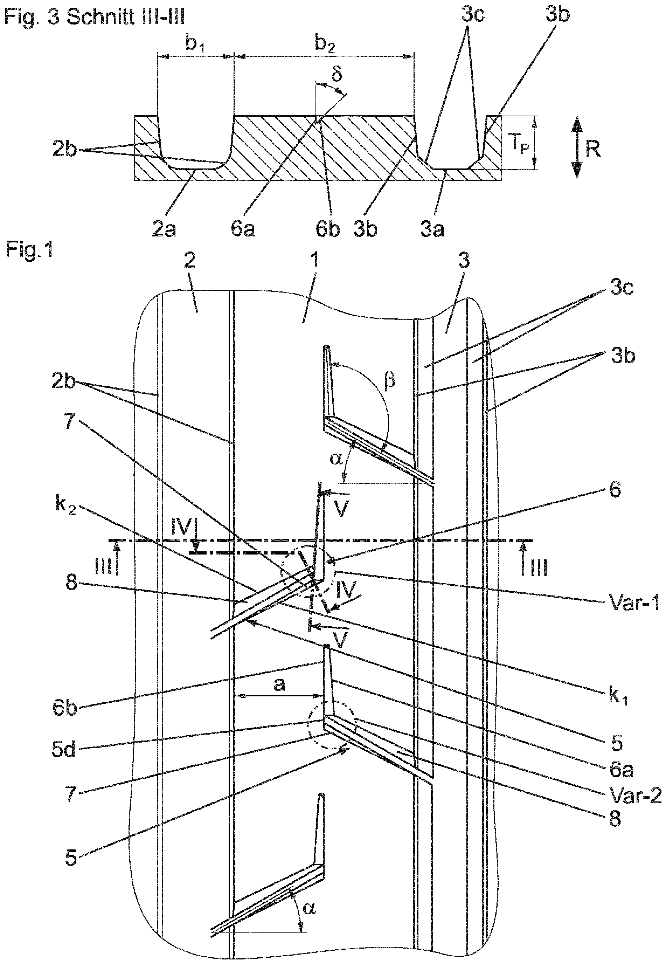

Fig. 1 zeigt eine Draufsicht auf einen Umfangsabschnitt eines Profilbandes 1 eines Laufstreifens eines Fahrzeugluftreifens, insbesondere eines Reifens für einen Personenkraftwagen. Laufstreifen von Fahrzeugluftreifen setzen sich üblicherweise aus einer Anzahl von durch Umfangsrillen voneinander getrennten Profilpositiven zusammen, welche entweder als Profilbänder bzw. Umfangsrippen oder als Profilblockreihen ausgeführt sind, wobei letztere aus in Umfangsrichtung aneinandergereihten und durch Querrillen voneinander getrennten Profilblöcken bestehen. Das in Fig. 1 gezeigte Profilband 1 ist durch je eine den Laufstreifen in Umfangsrichtung umlaufende Umfangsrille 2, 3 begrenzt, wobei seitlich der Umfangsrillen 2, 3 weitere strukturierte Laufstreifenbereiche, beispielsweise ebenfalls Profilbänder, anschließen können. Wie insbesondere die Schnittdarstellung in Fig. 3 zeigt, ist jede Umfangsrille 2, 3 durch einen Rillengrund 2a, 3a und zwei Rillenwände 2b, 3b begrenzt. Die Übergänge zwischen den in bzw. im Wesentlichen in radialer Richtung R orientierten Rillenwänden 2b und dem Rillengrund 2a sind gerundet, jene zwischen den Rillenwänden 3b und dem Rillengrund 3a sind von gegenüber der radialen Richtung R geneigt verlaufenden Verbindungsflanken 3c gebildet. Die Umfangsrillen 2, 3 weisen in radialer Richtung R eine Tiefe Tp auf, welche dem in radialer Richtung R gemessenen Abstand zwischen der tiefsten Stelle des Rillengrundes 2a, 3a zur Oberfläche des Profilbandes 1 entspricht. Üblicherweise entspricht die Tiefe Tp der Umfangsrillen 2, 3 der maximal vorgesehenen Profiltiefe, welche für PKW-Reifen in der Größenordnung von 6,0 mm bis 8,5 mm beträgt. Die Umfangsrillen 2, 3 weisen an der Profiloberfläche eine Breite b₁ auf, welche zwischen 6 mm und 16 mm beträgt, die in axialer Richtung gemessene Breite b₂ des Profilbandes 1 an seiner Oberfläche beträgt üblicherweise zwischen 16 mm und 36 mm.

Das Profilband 1 ist über seinen Umfang mit einer Vielzahl von Rillen 4 strukturiert, welche sich jeweils aus einem ersten und einem zweiten Rillenabschnitt 5, 6 zusammensetzen und in Umfangsrichtung abwechselnd mit ihrem ersten Rillenabschnitt 5 in die eine und in die andere Umfangsrille 2, 3 münden. Der erste Rillenabschnitt 5 mündet daher entweder an der Rillenwand 2b oder der Rillenwand 3b nach außen und erstreckt sich unter einem spitzen Winkel a, welcher bis zu 45°, vorzugsweise zwischen 15° und 35° beträgt, zur axialen Richtung. Die Anordnung der Rillen 4 im Profilband 1 ist dabei beispielhaft derart, dass die ersten Rillenabschnitte 5 der in die eine Umfangsrille 2 mündenden Rillen 4 gegenüber den in die andere Umfangsrille 3 mündenden ersten Rillenabschnitten 5 gegensinnig geneigt sind. Das im Profilband 1 befindliche Ende jedes Rillenabschnittes 5 reicht bis zu einem in axialer Richtung ermittelten Abstand a von 40 % bis 60 % der Breite b₂ in das Profilband 1. Bevorzugt endet der Rillenabschnitt 5 etwa in der Mitte des Profilbandes 1. Der an den ersten Rillenabschnitt 5 anschließende zweite Rillenabschnitt 6 verläuft in Umfangsrichtung bzw. im Wesentlichen in Umfangsrichtung, wobei der zwischen den Rillenabschnitten 5, 6 gebildete Winkel β mindestens 90°, vorzugsweise zwischen 100° und 150° beträgt. Der zweite Rillenabschnitt 6 weist eine Erstreckungslänge von 5 mm bis 40 mm auf. Der gegenseitige Abstand von im Profilband 1 in Umfangsrichtung aufeinanderfolgenden Rillen 4 wird vom Fachmann, insbesondere in Abstimmung mit der gewählten Pitchfolge und der Pitchlängenvariation des Laufstreifenprofils, entsprechend gewählt.

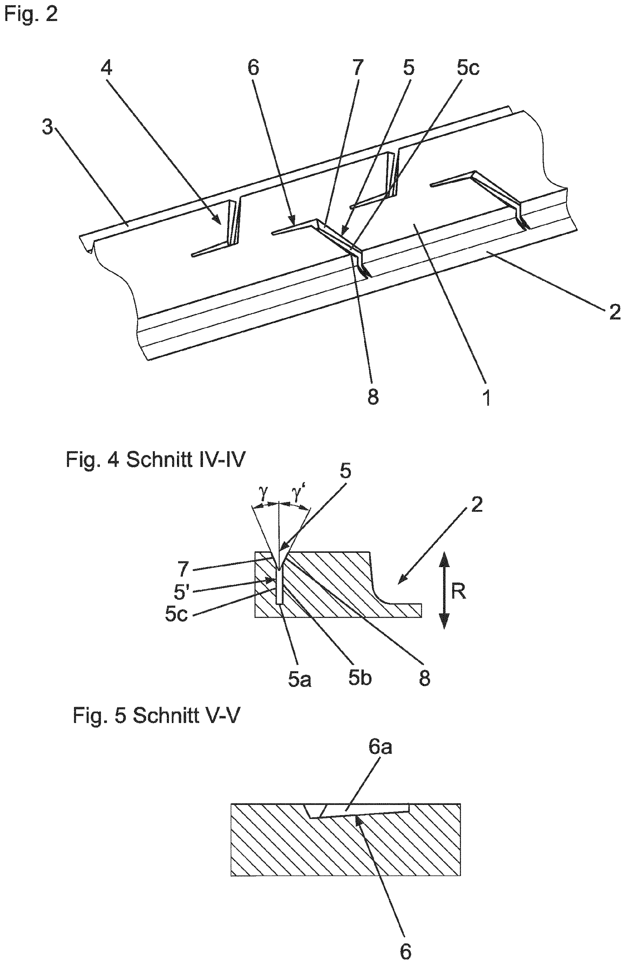

Der erste Rillenabschnitt 5 weist, wie es insbesondere die Schnittdarstellung in Fig. 4 zeigt, eine Basisrille 5' mit einem Rillengrund 5a und zwei sich von diesem in radialer Richtung erstreckenden Rillenwänden 5b, 5c auf, deren gegenseitiger Abstand die Breite der Basisrille 5' bestimmt und 0,8 mm bis 1,5 mm, insbesondere in der Größenordnung von 1,2 mm, beträgt. Der Rillengrund 5a der Basisrille 5' verläuft in einer Mindesttiefe von 70 % der Tiefe T_{P}, vorzugsweise in der Profiltiefe T_{P}. Die die Übergangsbereiche zwischen den beiden Rillenwänden 5b, 5c und der Oberfläche des Profilbandes 1 bildenden Rillenwände sind als Fasen 7, 8 ausgebildet, durch welche die Rille 4 zur Oberfläche des Profilbandes 1 verbreitert ist. Die Fasen 7, 8 sind in Draufsicht langgestreckte Schrägflächen, welche in radialer Richtung R bis in eine Tiefe von maximal 2 mm reichen. Die Fase 7 läuft bei der Umfangsrille 2 an oder nahe der Oberfläche des Profilbandes 1 aus, an ihrem laufstreifeninnenseitigen Ende reicht die Fase 7 höchstens bis in die erwähnte maximale Tiefe von 2 mm. Zwischen ihren Enden ändert sich die Tiefe der Fase 7 kontinuierlich.

Die Begrenzungskanten k₁, k₂ der Fasen 7, 8 an der Oberfläche des Profilbandes 1 verlaufen parallel zueinander, zur Basisrille 5' jedoch unter einem kleinen spitzen Winkel von 2° bis 5°.

Die Fase 7 verläuft unter Winkeln γ gegenüber der radialen Richtung R von 0° bis 30°. Die Fase 8 weist eine größere Neigung zur radialen Richtung R auf, die mit der radialen Richtung R gebildeten Winkel γ' betragen in der Größenordnung von 30° bis 70°.

Der zweite Rillenabschnitt 6 ist im Profilband 1 lediglich oberflächlich ausgebildet und reicht in radialer Richtung auf eine maximale Tiefe von bis zu 2 mm. Dabei weist, wie die Schnittdarstellung in Fig. 5 zeigt, der zweite Rillenabschnitt 6 an seinem geschlossenen Ende eine geringere Tiefe auf als an seinem Anschlussbereich an den Rillenabschnitt 5. Die Mindesttiefe am geschlossenen Ende des Rillenabschnittes 6 beträgt 1 mm. Der Rillenabschnitt 6 ist ferner bevorzugt derart ausgeführt, dass seine Breite an der Oberfläche des Profilbandes 1 im Anschlussbereich zum Rillenabschnitt 5 zwischen 1,5 mm bis 2 mm beträgt und hier am größten ist und in Richtung des geschlossenen Endes kontinuierlich geringer wird und hier mindestens 1 mm beträgt. Der Rillenabschnitt 6 besitzt einen besonderen Rillenquerschnitt, welcher Fig. 3 zu entnehmen ist. Der Rillenabschnitt 6 ist mit zwei zueinander V-förmig angeordneten Rillenflanken 6a, 6b ausgeführt, die miteinander einen spitzen Winkel δ in der Größenordnung von etwa 30° bis 45° einschließen, wobei die Rillenflanke 6a in radialer bzw. im Wesentlichen in radialer Richtung R verläuft und jene ist, die jener Umfangsrille 2 ,3 näher liegt, in welche der erste Rillenabschnitt 5 mündet. Die die Rillenflanke 6b an der Oberfläche des Profilbandes 1 begrenzende Kante verläuft, vom ersten Rillenabschnitt 5 aus betrachtet, vorzugsweise nicht über die Mittes des Profilbandes 1 hinaus. Der Anschlussbereich zwischen dem ersten Rillenabschnitt 5 und dem zweiten Rillenabschnitt 6 kann unterschiedlich ausgeführt werden. Bei einer möglichen, in Fig. 1 mit Var-1 bezeichneten, mit einem Kreis gekennzeichneten Ausführungsform schließt die Rillenflanke 6b des Rillenabschnittes 6 unmittelbar an die Fase 7 an, bei einer anderen, in Fig. 1 mit Var-2 bezeichneten und ebenfalls mit einem Kreis gekennzeichneten Ausführungsform schließt die Rillenflanke 6b unmittelbar an die Fase 8 an.

Der zweite Rillenabschnitt 6 weist einen besonderen asymmetrischen Querschnitt auf, wobei die geneigte Rillenflanke 6b dafür sorgt, dass Wasser aus dem Rillenabschnitt 6 die Fase 7 im ersten Rillenabschnitt 5 anströmt, wodurch eine optimale Ableitung von Wasser aus dem mittleren Bereich des Profilbandes 1 in die Umfangsrille 2 bzw. die Umfangsrille 3 sichergestellt ist.

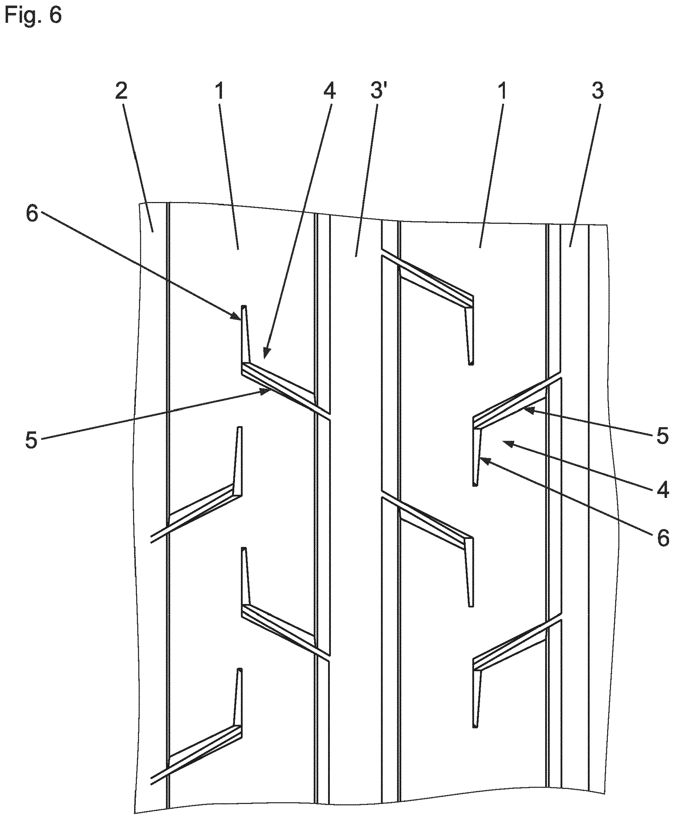

Fig. 6 zeigt eine Ausführungsvariante der Anordnung erfindungsgemäß ausgeführter Rillen 4 in zwei zueinander benachbart verlaufenden Profilbändern 1. Die gemäß Fig. 1 ausgeführten Profilbänder 1 sind voneinander durch eine breite Umfangsrille 3', die analog zu den bereits beschriebenen Umfangsrillen ausgeführt sein kann, getrennt. Die Anordnung der Rillen 4 in den Profilbändern 1 ist derart, dass die Rillenabschnitte 6 in dem einen Profilband in die eine der beiden möglichen Umfangsrichtungen weisen und die Rillenabschnitte 6 in dem zweiten Profilband 1 in die andere, entgegengesetzte Umfangsrichtung weisen. Grundsätzlich entspricht jedoch die Anordnung der Rillen 4 in den beiden Profilbändern jener gemäß Fig. 1.

Die Erfindung ist auf die dargestellten und beschriebenen Ausführungsformen nicht beschränkt. Insbesondere können sämtliche in einem Profilband 1 vorgesehene Rillen 4 in die gleiche Umfangsrille münden. Erfindungsgemäß ausgeführte Rillen können ferner in Profilblöcken von Profilblockreihen angeordnet werden.

### Bezugsziffernliste

- 1: Profilband
- 2: Umfangsrille
- 2a: Rillengrund
- 2b: Rillenwand
- 2c: Verbindungsflanke
- 3: Umfangsrille
- 3': Umfangsrille
- 3a: Rillengrund
- 3b: Rillenwand
- 3c: Verbindungsflanke
- 4: Rille
- 5: Rillenabschnitt
- 5': Basisrille
- 5a: Rillengrund
- 5b: Rillenwand
- 5c: Rillenwand
- 6: Rillenabschnitt
- 6a: Rillenflanke
- 6b: Rillenflanke
- 7: Fase
- 8: Fase
- T_{P}: Tiefe
- b₁: Breite
- b₂: Breite
- k₁: Begrenzungskanten
- k₂: Begrenzungskanten
- α: Winkel
- β: Winkel
- γ: Winkel
- γ': Winkel
- δ: Winkel
- a: Abstand

## Patentansprüche

1. Fahrzeugluftreifen mit einem Laufstreifenprofil, welches durch
Umfangsrillen (2, 3, 3') in in Umfangsrichtung umlaufende Profilpositive, wie Profilbänder (1) und/oder Profilblockreihen gegliedert ist, wobei zumindest ein Profilpositiv (1) vorgesehen ist, in welchem Rillen (4) ausgebildet sind, welche sich jeweils aus zwei unter einem stumpfen Winkel (β) zueinander und jeweils im Wesentlichen gerade verlaufenden Rillenabschnitten (5, 6) zusammensetzen, von welchen der eine, erste Rillenabschnitt (5) in eine das Profilpositiv (1) begrenzende Umfangsrille (2, 3, 3') mündet und unter einem Winkel (α) von höchstens 45° zur axialen Richtung verläuft und wobei sich der zweite Rillenabschnitt (6) zumindest im Wesentlichen in Umfangsrichtung erstreckt und von zwei Rillenflanken (6a, 6b) begrenzt ist, wobei jene Rillenflanke (6a), welche der Umfangsrille (2, 3, 3'), in welche der erste Rillenabschnitt (5) mündet, näher liegt, im Querschnitt zumindest im Wesentlichen in radialer Richtung verläuft,
**dadurch gekennzeichnet,**
**dass** der in Umfangsrichtung verlaufende zweite Rillenabschnitt (6) eine geringere Tiefe aufweist als der erste Rillenabschnitt (5) und im Querschnitt von zwei zueinander V-förmig verlaufenden Rillenflanken (6a, 6b) begrenzt ist, wobei die von Wasser aus dem zweiten Rillenabschnitt (6) unmittelbar angeströmte Rillenwand des ersten Rillenabschnittes (5) eine über die Längserstreckung des Rillenabschnittes (5) ausgebildete Fase (7) ist.

2. Fahrzeugluftreifen nach Anspruch 1, **dadurch gekennzeichnet, dass** der in Umfangsrichtung verlaufende zweite Rillenabschnitt (6) eine maximale Tiefe von 2 mm aufweist, welche über den Verlauf des Rillenabschnittes (6) in Richtung erstem Rillenabschnitt (5) kontinuierlich zunimmt.

3. Fahrzeugluftreifen nach Anspruch 1 oder 2, **dadurch gekennzeichnet, dass** der in Umfangsrichtung verlaufende zweite Rillenabschnitt (6) eine Breite von höchstens 2 mm aufweist, welche über den Verlauf des Rillenabschnittes (6) in Richtung erstem Rillenabschnitt (5) kontinuierlich zunimmt.

4. Fahrzeugluftreifen nach einem der Ansprüche 1 bis 3, **dadurch gekennzeichnet, dass** die an die in radialer Richtung verlaufende Rillenflanke (6a) angrenzende zweite Rillenflanke (6b) des zweiten Rillenabschnittes (6) einen Winkel mit der anderen Rillenflanke (6a) einschließt, welcher zwischen 30° und 45° beträgt.

5. Fahrzeugluftreifen nach Anspruch 1, **dadurch gekennzeichnet, dass** der in die Umfangsrille (2, 3, 3') mündende erste Rillenabschnitt (5) eine Basisrille (5') aufweist, an welche zur Oberfläche des Profilpositives (1) als Fasen (7, 8) ausgebildete Rillenwände anschließen, welche den Rillenabschnitt (5) zur Oberfläche des Profilpositives (1) verbreitern.

6. Fahrzeugluftreifen nach Anspruch 1 oder 5, **dadurch gekennzeichnet, dass** die Basisrille (5') von zwei in radialer Richtung verlaufenden Rillenwänden (5a, 5b) begrenzt ist, eine Breite von 0,8 mm bis 1,5 mm aufweist und einen Rillengrund (5c) besitzt, welcher in einer Tiefe verläuft, die mindestens 70 % der vorgesehenen Profiltiefe (P_{T}) und höchstens der Profiltiefe (P_{T}) entspricht.

7. Fahrzeugluftreifen nach Anspruch 1, 5 oder 6, **dadurch gekennzeichnet, dass** die von Wasser aus dem zweiten Rillenabschnitt (6) anströmbare Fase (7) des ersten Rillenabschnittes (5) bei der Umfangsrille (2) an oder nahe der Oberfläche des Profilpositives (1) ausläuft, wobei ihre radiale Erstreckung an ihrem im Profilpositiv (1) befindlichen Ende am größten ist und hier der radialen Erstreckung der Rillenflanken (6a, 6b) des zweiten Rillenabschnittes (6) zumindest im Wesentlichen entspricht.

8. Fahrzeugluftreifen nach einem der Ansprüche 1 oder 5 bis 7, **dadurch gekennzeichnet, dass** die von Wasser aus dem zweiten Rillenabschnitt (6) anströmbare Fase (7) des ersten Rillenabschnittes (5) gegenüber der radialen Richtung unter Winkeln von 5° bis 45° geneigt verläuft.

9. Fahrzeugluftreifen nach Anspruch 1 oder 6, **dadurch gekennzeichnet, dass** die zweite Fase (8) des ersten Rillenabschnittes (5) mit einer im Wesentlichen konstanten radialen Erstreckung ausgebildet ist.

10. Fahrzeugluftreifen nach Anspruch 1, 6 oder 9, **dadurch gekennzeichnet, dass** die zweite Fase (8) des ersten Rillenabschnittes (5) gegenüber der radialen Richtung unter Winkeln von 30° bis 70° geneigt verläuft.

11. Fahrzeugluftreifen nach einem der Ansprüche 1 bis 10, **dadurch gekennzeichnet, dass** die Fase(n) (7, 8) des ersten Rillenabschnittes (5) eine radiale Erstreckung von höchstens 2 mm aufweist bzw. aufweisen.

12. Fahrzeugluftreifen nach einem der Ansprüche 1 bis 11, **dadurch gekennzeichnet, dass** die die gegenüber der radialen Richtung geneigt verlaufende Rillenflanke (6b) an der Oberfläche des Profilpositives (1) begrenzende Kante des Rillenabschnittes (6), vom ersten Rillenabschnitt (5) aus betrachtet, nicht über die Mitte des Profilpositives hinaus verläuft.

13. Fahrzeugluftreifen nach einem der Ansprüche 1 bis 12, **dadurch gekennzeichnet, dass** der zweite Rillenabschnitt (6) eine Erstreckungslänge von 5 mm bis 40 mm aufweist.

## Claims

1. Pneumatic vehicle tyre with a tread pattern which is divided by circumferential grooves (2, 3, 3') into profile positives running around in the circumferential direction, such as profile strips (1) and/or rows of profile blocks, there being provided at least one profile positive (1) that has formed in it grooves (4) which are made up respectively of two groove portions (5, 6) running at an obtuse angle (β) in relation to one another and in each case substantially straight, of which the one, first groove portion (5) opens out into a circumferential groove (2, 3, 3') delimiting the profile positive (1) and runs in relation to the axial direction at an angle (α) of at most 45°, and the second groove portion (6) extends at least substantially in the circumferential direction and is delimited by two groove flanks (6a, 6b), the groove flank (6a) that lies closer to the circumferential groove (2, 3, 3') into which the first groove portion (5) opens out running at least substantially in the radial direction in cross section,
**characterized**
**in that** the second groove portion (6), running in the circumferential direction, has a smaller depth than the first groove portion (5) and is delimited in cross section by two groove flanks (6a, 6b) running in a V-shaped manner in relation to one another, the groove wall of the first groove portion (5) that is subjected directly to the flow of water from the second groove portion (6) being a bevel (7) formed over the longitudinal extent of the groove portion (5).

2. Pneumatic vehicle tyre according to Claim 1, **characterized in that** the second groove portion (6), running in the circumferential direction, has a maximum depth of 2 mm, which increases continuously over the course of the groove portion (6) in the direction of the first groove portion (5).

3. Pneumatic vehicle tyre according to Claim 1 or 2, **characterized in that** the second groove portion (6), running in the circumferential direction, has a width of at most 2 mm, which increases continuously over the course of the groove portion (6) in the direction of the first groove portion (5).

4. Pneumatic vehicle tyre according to one of Claims 1 to 3, **characterized in that** the second groove flank (6b) of the second groove portion (6), adjoining the groove flank (6a) running in the radial direction, forms an angle with the other groove flank (6a) that is between 30° and 45°.

5. Pneumatic vehicle tyre according to Claim 1, **characterized in that** the first groove portion (5), opening out into the circumferential groove (2, 3, 3'), comprises a base groove (5'), which is adjoined towards the surface of the profile positive (1) by groove walls that are formed as bevels (7, 8) and widen the groove portion (5) towards the surface of the profile positive (1).

6. Pneumatic vehicle tyre according to Claim 1 or 5, **characterized in that** the base groove (5') is delimited by two groove walls (5a, 5b) running in the radial direction, has a width of 0.8 mm to 1.5 mm and comprises a groove base (5c), which runs at a depth that corresponds to at least 70% of the provided profile depth (P_{T}) and at most to the profile depth (P_{T}).

7. Pneumatic vehicle tyre according to Claim 1, 5 or 6, **characterized in that** the bevel (7) of the first groove portion (5) that is subjected to the flow of water from the second groove portion (6) runs out at the circumferential groove (2) on or near the surface of the profile positive (1), its radial extent being at the greatest at its end located in the profile positive (1) and corresponding there at least substantially to the radial extent of the groove flanks (6a, 6b) of the second groove portion (6) .

8. Pneumatic vehicle tyre according to one of Claims 1 or 5 to 7, **characterized in that** the bevel (7) of the first groove portion (5) that is subjected to the flow of water from the second groove portion (6) runs inclined at angles of 5° to 45° with respect to the radial direction.

9. Pneumatic vehicle tyre according to Claim 1 or 6, **characterized in that** the second bevel (8) of the first groove portion (5) is formed with a substantially constant radial extent.

10. Pneumatic vehicle tyre according to Claim 1, 6 or 9, **characterized in that** the second bevel (8) of the first groove portion (5) runs inclined at angles of 30° to 70° with respect to the radial direction.

11. Pneumatic vehicle tyre according to one of Claims 1 to 10, **characterized in that** the bevel(s) (7, 8) of the first groove portion (5) has or have a radial extent of at most 2 mm.

12. Pneumatic vehicle tyre according to one of Claims 1 to 11, **characterized in that**, seen from the first groove portion (5), the edge of the groove portion (6) that delimits the groove flank (6b), running inclined with respect to the radial direction, does not run beyond the middle of the profile positive at the surface of the profile positive (1).

13. Pneumatic vehicle tyre according to one of Claims 1 to 12, **characterized in that** the second groove portion (6) has a length of extent of 5 mm to 40 mm.

## Revendications

1. Pneumatique de véhicule comprenant un profil de bande de roulement qui est divisé par des rainures périphériques (2, 3, 3') en parties profilées positives s'étendant sur la périphérie dans la direction périphérique, telles que des bandes profilées (1) et/ou des rangées de blocs profilés, au moins une partie profilée positive (1) étant prévue, dans laquelle sont réalisées des rainures (4) qui se composent à chaque fois de portions de rainure (5, 6) s'étendant suivant un angle obtus (β) les unes par rapport aux autres et s'étendant à chaque fois essentiellement en ligne droite, parmi lesquelles la première portion de rainure (5) débouche dans une rainure périphérique (2, 3, 3') délimitant la partie profilée positive (1) et s'étend suivant un angle (α) de maximum 45° et la deuxième portion de rainure (6) s'étendant au moins essentiellement dans la direction périphérique et étant limitée par deux flancs de rainure (6a, 6b), le flanc de rainure (6a) qui est le plus proche de la rainure périphérique (2, 3, 3') dans laquelle débouche la première portion de rainure (5) s'étendant en section transversale au moins essentiellement dans la direction radiale,
**caractérisé en ce que**
la deuxième portion de rainure (6) s'étendant dans la direction périphérique présente une moindre profondeur que la première portion de rainure (5) et est limitée en section transversale par deux flancs de rainure (6a, 6b) s'étendant en forme de V l'un par rapport à l'autre, la paroi de rainure de la première portion de rainure (5) contre laquelle afflue directement l'eau provenant de la deuxième portion de rainure (6) étant un biseau (7) réalisé sur l'étendue longitudinale de la portion de rainure (5).

2. Pneumatique de véhicule selon la revendication 1, **caractérisé en ce que** la deuxième portion de rainure (6) s'étendant dans la direction périphérique présente une profondeur maximale de 2 mm qui augmente en continu sur l'étendue de la portion de rainure (6) dans la direction de la première portion de rainure (5).

3. Pneumatique de véhicule selon la revendication 1 ou 2, **caractérisé en ce que** la deuxième portion de rainure (6) s'étendant dans la direction périphérique présente une largeur de 2 mm au maximum, qui augmente en continu sur l'étendue de la portion de rainure (6) dans la direction de la première portion de rainure (5).

4. Pneumatique de véhicule selon l'une quelconque des revendications 1 à 3, **caractérisé en ce que** le deuxième flanc de rainure (6b) de la deuxième portion de rainure (6), adjacent au flanc de rainure (6a) s'étendant la direction radiale, forme un angle compris entre 30° et 45° avec l'autre flanc de rainure (6a).

5. Pneumatique de véhicule selon la revendication 1, **caractérisé en ce que** la première portion de rainure (5) débouchant dans la rainure périphérique (2, 3, 3') présente une rainure de base (5') à laquelle se raccordent des parois de rainure réalisées sous forme de biseaux (7, 8) vers la surface de la partie profilée positive (1), lesquelles parois de rainure élargissent la portion de rainure (5) vers la surface de la partie profilée positive (1).

6. Pneumatique de véhicule selon la revendication 1 ou 5, **caractérisé en ce que** la rainure de base (5') est limitée par deux parois de rainure (5a, 5b) s'étendant dans la direction radiale, présente une largeur de 0,8 mm à 1,5 mm et possède un fond de rainure (5c) qui s'étend à une profondeur qui correspond au moins à 70 % de la profondeur de profilé prévue (P_{T}), et au plus à la profondeur de profilé (P_{T}) .

7. Pneumatique de véhicule selon les revendications 1, 5 ou 6, **caractérisé en ce que** le biseau (7) de la première portion de rainure (5) contre lequel peut affluer l'eau provenant de la deuxième portion de rainure (6) se termine au niveau de la rainure périphérique (2) contre ou à proximité de la surface de la partie profilée positive (1), son étendue radiale au niveau de son extrémité se trouvant dans la partie profilée positive (1) étant maximale et correspondant ici au moins essentiellement à l'étendue radiale des flancs de rainure (6a, 6b) de la deuxième portion de rainure (6) .

8. Pneumatique de véhicule selon l'une quelconque des revendications 1 ou 5 à 7, **caractérisé en ce que** le biseau (7) de la première portion de rainure (5) contre lequel peut affluer l'eau provenant de la deuxième portion de rainure (6) s'étend par rapport à la direction radiale sous forme inclinée suivant des angles de 5° à 45°.

9. Pneumatique de véhicule selon la revendication 1 ou 6, **caractérisé en ce que** le deuxième biseau (8) de la première portion de rainure (5) est réalisé avec une étendue radiale essentiellement constante.

10. Pneumatique de véhicule selon les revendications 1, 6 ou 9, **caractérisé en ce que** le deuxième biseau (8) de la première portion de rainure (5) s'étend par rapport à la direction radiale sous forme inclinée suivant des angles de 30° à 70°.

11. Pneumatique de véhicule selon l'une quelconque des revendications 1 à 10, **caractérisé en ce que** le ou les biseaux (7, 8) de la première portion de rainure (5) présente ou présentent une étendue radiale de 2 mm maximum.

12. Pneumatique de véhicule selon l'une quelconque des revendications 1 à 11, **caractérisé en ce que** l'arête de la portion de rainure (6) limitant le flanc de rainure (6b) s'étendant sous forme inclinée par rapport à la direction radiale au niveau de la surface de la partie profilée positive (1), vu depuis la première portion de rainure (5), ne s'étend pas au-delà milieu de la partie profilée positive.

13. Pneumatique de véhicule selon l'une quelconque des revendications 1 à 12, **caractérisé en ce que** la deuxième portion de rainure (6) présente une longueur d'étendue de 5 mm à 40 mm.
